(19) **Europäisches Patentamt**
**European Patent Office**
**Office européen des brevets**

(11) **EP 4 233 045 B1**

(12) **EUROPEAN PATENT SPECIFICATION**

(45) Date of publication and mention
of the grant of the patent:
**26.11.2025 Bulletin 2025/48**

(21) Application number: **21806364.2**

(22) Date of filing: **19.10.2021**

(51) International Patent Classification (IPC):
**G10L 15/04** (2013.01)     **G10L 15/065** (2013.01)
**G10L 15/16** (2006.01)     **G10L 15/26** (2006.01)

(52) Cooperative Patent Classification (CPC):
**G10L 15/04; G10L 15/065; G10L 15/16;
G10L 15/26**

(86) International application number:
**PCT/IB2021/059618**

(87) International publication number:
**WO 2022/084851 (28.04.2022 Gazette 2022/17)**

(54) **EMBEDDED DICTATION DETECTION**

EINGEBETTETE DIKTIERDETEKTION

DÉTECTION INTÉGRÉE DE DICTÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2020 US 202063198474 P**

(43) Date of publication of application:
**30.08.2023 Bulletin 2023/35**

(73) Proprietor: **Solventum Intellectual Properties
Company
Maplewood, MN 55144 (US)**

(72) Inventors:
• **SCHAAF, Thomas
Saint Paul, Minnesota 55133-3427 (US)**
• **BAYESTEHTASHK, Alireza
Pittsburgh, Pennsylvania 15206 (US)**
• **FUHS, Mark C.
Saint Paul, Minnesota 55133-3427 (US)**

(74) Representative: **Vossius & Partner
Patentanwälte Rechtsanwälte mbB
Siebertstraße 4
81675 München (DE)**

(56) References cited:
**US-A1- 2017 092 297     US-A1- 2017 280 235
US-A1- 2018 308 565**

## Description

## Technical Field

This disclosure relates to the analysis of audio recordings and specifically the detection of indicia of dictation in audio recordings generated as part of physician/patient encounters.

## Background

Physicians have generated recordings regarding patient encounters as a means for improving the accuracy of medical records. Typically, dictations are generated either contemporaneously with the provision of medical care or soon thereafter to preserve the accuracy of the physician's recollections of the encounter.

In asynchronous scribing, a person other than the physician (e.g., a scribe), takes a recording of the patient encounter and enters the information into the medical records on behalf of the physician. In a scribing environment, generally, and in asynchronous scribing more specifically, it often happens that a physician provides some indication that certain portions of the recorded physician/patient encounter are directed at the scribe. Also, depending on the location of the dictation in the recorded audio, the scribe may be required to listen to the entire audio recording. In some situations, information provided earlier in audio recording is rendered obsolete by dictations occurring later in the audio recording.

Existing systems are able to extract dictation from portions of speech that are limited only to dictation but perform poorly when the portions of speech transition between dictation and non-dictation. As a result, scribing systems tend to rely on the physician to identify which portions of the audio are dictation and which portions are not. This may include requiring the physician provide an audio cue before reciting information the physician wants the scribe to enter into the medical record:

Document US 2017/092297 A1 describes a system for speech dictation in a medical environment wherein a user can indicate the start of a dictation segment by a key press or an explicit verbal command.

## Summary

The present disclosure describes systems and techniques for automatically identifying portions of a recorded physician/patient encounter without relying on the physician to self-identify those portions of the recorded encounter as being dictation.

One goal of the disclosure is to improve the accuracy of systems that engage in dictation detection by making the dictation detection model more resilient to transition between dictation and non-dictation.

Another goal of the disclosure is to improve the efficiency of the scribing process, allowing the scribe to navigate to identified portions of the audio recording in a non-linear way to improve the efficiency of the scribing process generally and to reduce the utilization of audio playback and editing systems more specifically.

Yet another goal of the disclosure is to improve the accuracy of the scribing process by automatically identifying portions of the audio recording that are intended to be included in electronic medical records without the heavy reliance on the physician self-identifying portions of the audio recording as dictation.

## Brief Description of Drawings

FIG. 1 is a block diagram illustrating an example system for detecting the presence of dictation in an audio recording.
FIG. 2 is a block diagram illustrating an example workflow of the dictation detection module.
**FIG.** 3 is a block diagram illustrating additional aspects of the workflow of the dictation detection module.
FIG. 4 is a block diagram illustrating another an example workflow of the dictation detection module.

## Detailed Description

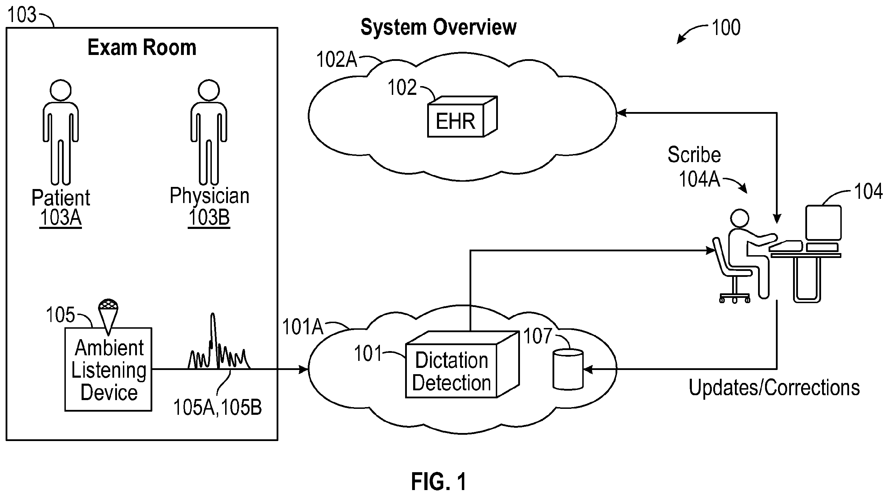

FIG. 1 is a block diagram illustrating an example system 100 for detecting the presence of dictation in an audio recording. In general, the system 100 includes one or more computer processors, storage devices, and communication interfaces, that enable the system 100 to communicate (e.g., send and receive), store, and process information over a computer network. For instance, the system 100 can be configured to communicate, store, and process information using a storage device 107, and networks 101A and 102A. The system 100 also includes one or more display devices that can be used to present one or more graphical user interfaces to one or more human users. Situations in which the system 100 may be used include when a physician 103B (or other healthcare provider) is discussing medical care with a patient 103A. This may include, for example, discussing test results, recommended courses of care, and the like. For the purposes of memorializing these discussions, the physician 103B may record the encounter. Some aspects of the recording may include dictations that are to be entered into the electronic health record ("EHR") 102A, which may be stored in any number of conventional data storage devices, while other aspects of the recording may be less clinical and more conversational in nature and can be omitted from the EHR 102.

One example scenario in which the system 100 may be deployed is in a setting where the physician 103B examines the patient 103A in an examination room 103, although it should be understood that the system 100 may be deployed in any setting where physician/patient encounters are recorded. It should be noted, that in some situations, the physician 103B may choose to begin the recording before the patient 103A enters the room 103 to provide medical history regarding the patient 103A, the reason for the visit, or for other reasons. Furthermore, the physician 103B may continue recording after the patient 103A leaves the room 103 for any number of reasons. It is also not uncommon for a physician 103B to verbalize findings of an examination while the physician 103B is conducting the examination. For example, a physician 103B may comment during an evaluation of a patient 103A's neck describing irregularities found during the examination, such as swollen lymph nodes or other irregularities. As a result, dictations may occur at the beginning of the recording, at the end of the recording and at any point in between.

The system 100 includes an ambient listening device 105. In general, the ambient listening device 105 can be any number of conventional recording devices such as a Bluetooth® enabled microphone or a microphone embedded in another computing device, such as a smart phone or other mobile device, to name a few examples. According to particular implementations, the ambient listening device 105 may stream the captured audio to one or more dictation detection modules 101 stored on one more computers in communication with networks 101A and 102A or may store the captured audio on the ambient listening device 105. In some implementations, the ambient listening device 105 may be configured to process the stored audio in the same manner as the one or more dictation detection modules 101 in the networks 101A and 102A or may be configured to transmit the stored audio to one or more computers in communication with networks 101A and 102A at some later time for processing.

In addition to the audio, the system 100 receives additional metadata from the ambient listening device 105, including information related to the type of ambient listening device 105 and other information that can be useful in detecting dictated audio. For instance, in some implementations, the ambient listening device 105 may be integrated with motion sensors, position sensors, and other sensors that can be used in determining where the ambient listening device 105 is relative to the physician 103B, the patient 103A, or both.

The system 100 may also be configured to receive information from the physician 103B that identifies the physician in some way. For instance, the system 100 may store one or more unique physician identifiers, one of which being assigned to the physician 103B. In some implementations, the system 100 may recall the physician identifier when the physician 103B provides his or her credentials to the system 100. For instance, the system 100 may accept a username and password from the physician 103B, may scan an RF id tag in possession of the physician 103B, or may take one or more biometric readings of the physician 103B to authenticate the physician 103B's identity, although other means for determining the physician identifier are also possible.

In general, the system 100 attempts to learn the speech patterns of the physician 103B to automatically detect when the physician is dictating medical information and when the physician is not dictating information. One problem that has been identified is that physicians as a group typically use a wide range of vocabulary to start dictations, but individual physicians tend to be somewhat consistent in how they begin dictations. As a result, implementations of the system 100 may be configured to learn when the physician 103B is introducing a dictation based on historical tendencies of the physician 103B. For instance, the system 100 may use natural language processing techniques to aggregate data for particular phases by the physician 103B that do (or do not) suggest the start of a dictation in the audio recording to determine a probability that a particular spoken word or phrase is indicative of dictation. As another example, the system 100 can leverage other types of semantic and/or linguistic patterns in the audio recording to identify indicia of dictation. One example is that physicians tend to recite punctuation (e.g., using words like "comma," "period," and the like) when dictating and those types of words typically do not arise when the physician 103B is not dictating. Used herein, the terms audio, audio recording, audio signal, and recorded audio signal are used interchangeably. That is, in general, the audio signal captured by the ambient listening device 105 is received and stored by the system in preparation for the techniques as described. For instance, audio recordings 105A and 105B can be captured by the ambient listening device 105 and transmitted by the system 100 to storage device 107 contained within the computing network 101A.

That said, because physicians are not always consistent when introducing dictations, it may not be sufficient to analyze only linguistic content of the audio recording as an indication of dictation. For example, in some implementations, the system 100 is configured to analyze the recorded audio signal to identify other indicia of dictation like the physician 103B's position relative to the ambient listening device 105, where a closer proximity to the ambient listening device 105 may be suggestive of dictation while a farther proximity to the microphone may be suggestive of non-dictated audio content between the physician 103B and the patient 103A.

As will be described in more detail below, the system 100 is configured to segment the audio recording according to one or more determined probabilities associated with portions of the recorded audio signal to identified those portions of the audio signal that are dictations and those portions of the audio signal that are not dictations. Also, as will be described in more detail below, the system 100 is configured to use these generated segments in several ways. For example, the segments can be provided to a natural language processing module as training data to improve the overall accuracy of the system 100 to predict segments of a received audio recording that are dictation and those segments that are not dictation. As another example, the system 100 can present these segments as a draft dictation to the scribe 104A for the scribe's review. For instance, in some implementations, a computing device 104 that the scribe 104A uses to listen to recorded audio can receive the segments from the computing network 101A. This allows, e.g., the scribe 104A to listen to the audio (such as audio 105A and 105B) and compare it to the draft dictation generated by the system 100. In some implementations, the scribe may make edits to the draft dictation to correct errors caused by the system 100 and ensure that accurate information is included in the EHR 102. As used herein, a scribe 104A is a human who reviews information for inclusion in the EHR 102 and should not be confused with a transcriber-which used herein is a human who listens to recorded audio and generates transcriptions of the recorded audio.

Because the audio is presented in a segmented form, it allows the scribe 104A to easily navigate the audio recording and listen to those segments that appear to the scribe 104A as potentially including dictated information. This can be of particular importance because the scribe 104A can listen to the one or more identified dictations first as a means of contextualizing the entire conversation between the physician 103B and the patient 103A, which can reduce the number of scribing errors that the scribe 104A may need to revisit if the scribe 104A were to listen to the audio recording in a more linear fashion. For example, in some situations the audio earlier in non-dictated portions of the audio may be incorrect or inconsistent with dictations found later in the audio recording because, e.g., the physician 103B's opinion may change during examination or for other reasons. As a result, both the accuracy of the information entered into the EHR 102 and the utilization of the computing system 104 can be enhanced by allowing the scribe 104A to first review dictations before listening to the whole audio recording from start to finish.

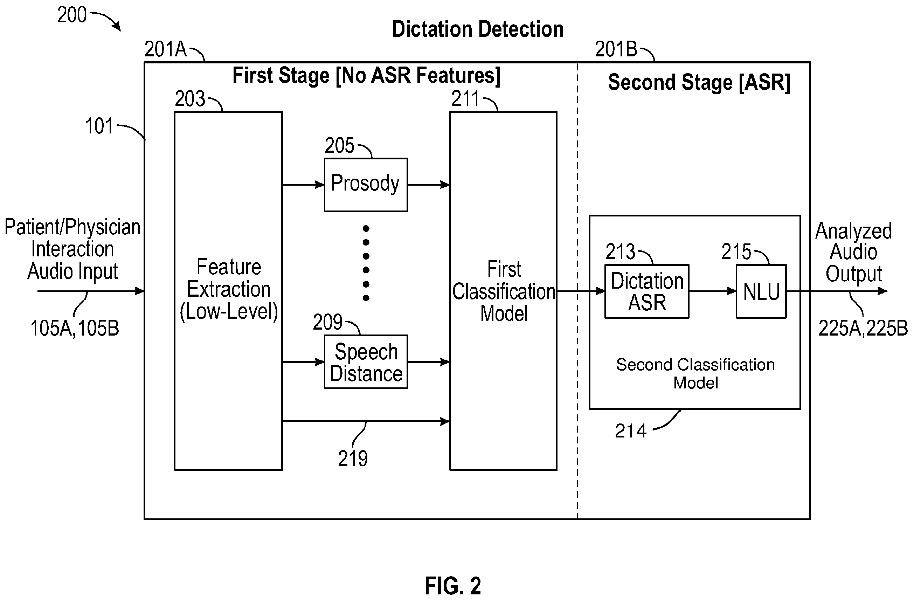

FIG. 2 is a block diagram illustrating an example workflow 200 of the dictation detection module 101. The example workflow 200 includes two stages. The first stage 201A of the workflow 200 can be done with a first classification model 211 and without the use of automatic speech recognition. For instance, the first classification model 211 can be trained on acoustic features identified in an audio signal (e.g., audio signals 105A and 105B) to generate one or more probability scores that the analyzed portion of audio is indicative of dictation. The dictation detection module 101 can also process the audio in a second stage 201B of the workflow 200 using a second classification model 214. For instance, the second classification model 214 can be an automatic speech recognition engine 213 that extracts one or more words from audio segments that are identified as being indicative of dictation. In some implementations, as will be described in more detail below, the second classification model 214 may also include a natural language understanding engine 215 that can further refine information from the results produced by the automatic speech recognition engine 213. For instance, the natural language understanding engine 215 can identify one or more words that the natural language understanding engine 215 deems important for inclusion in the EHR 102.

In the first stage 201A, the dictation detection module 101 may first perform low-level feature extraction 203 on the audio. In general, the low-level feature extraction 203 is conducted on a feature vector describing the audio's characteristics. Stated differently, the system 100 may perform one or more transformations on the audio signal to conduct a spectral analysis of the audio signal to determine one or more characteristics of the audio signal that may be indicative of speech that is dictation or may be indicative of speech that is not dictation.

In some implementations, performing low-level feature extraction 203 may include determining mel-frequency cepstral coefficient ("MFCC") features, Fourier transformed features, log-mel features, power features, zero crossing features, and other numeric representations that describe characteristics of the audio that are agnostic to the underlying linguistic meaning of the audio. That is, the one or more extracted features can be used to describe various non-linguistic characteristics of the audio signal. One example is that these low-level features may describe the loudness of the audio without regard to the linguistic meaning of the audio itself. Another example is that these low-level features may describe how fast someone is speaking, again without regard to what the speaker is actually saying. In one implementation, the dictation detection module 101 may determine the number of harmonic peaks in the audio signal waveform that are indicative of vowels or syllables spoken during a period of time to determine how fast the speaker is talking. That is, the closer together the harmonic peaks, the fast the rate of speech. This can be useful, e.g., because a high rate of speech may be associated with a dictation while a slower rate of speech may be indicative of speech that is not dictation. Stated differently, the low-level feature extraction 203 may be performed by analyzing the audio waveforms and quantifying the various energy peaks in the waveform.

In one example, low-level feature extraction 203 is performed on a feature vector that describes 10 ms of the audio signal, although it should be understood that particular feature vectors may be of any length and need not be a uniform length across all low-level features. The one or more low-level features that are extracted from the feature vector may be aggregated into higher-level features which may also be analyzed by the system 100 in the first stage 201A. By way of example, a higher-level feature can be generated analyzing how a particular low-level feature changes over time. In such instances where a higher-level feature specifies how a low-level feature changes over time, the higher-level feature may be many orders of magnitude longer in duration than the low-level feature from which the higher-level feature is derived. It should also be appreciated that the system 100 can be configured to analyze other types of higher-level features and may even be configured to generate and analyze mid-level features.

The dictation detection module 101 may perform pitch estimation 205 (or prosodic analysis), which measures how the fundamental frequency of the audio shifts. This may be useful in capturing when questions are asked (e.g., because prosodic frequency may go up at the end of a sentence that contains a question) or when the audio is suggestive of some amount of emotion being presented by the speaker. For instance, the prosodic frequency of the physician 103B may shift when the physician 103B conveys empathy to the patient 103A. Such changes may define a larger dynamic range in the prosodic frequency which may be indicative that the analyzed portion of speech is not dictation. Conversely, a lower dynamic range of the prosodic frequency may be indicative of dictation.

In the first stage 201A, the dictation detection module 101 may also analyze speaker distance 209. In some implementations, the dictation detection module 101 may attempt to determine when the speaker is near-field, far-field, or close-speaking. In one implementation, far-field is defined as being two meters or more away from the ambient listening device 105, close-speaking is defined when the speaker is holding the ambient listening device 105 close (e.g., less than 5 decimeters from the speaker's mouth), and near-field is defined as something greater than close-speaking but less than far-field (e.g., 5 decimeters to 2 meters). This can be a useful distinction because, e.g., it may be more likely that the physician 103B is dictating when he or she is determined to be close-speaking into the ambient listening device 105.

The various steps that the dictation detection module 101 performs during the first stage 201A of the workflow 200 are illustrative and should not be seen as exhaustive. That is, there are many other types of non-speech recognition-based approaches that can be used to determine useful information regarding the portion of the analyzed audio. For instance, the dictation detection module 101 may also attempt to identify change in the speaker based on differences in the statistical distribution of the waveform. In such implementations, one or more changes in the statistical waveform of the audio may be suggestive of more than one speaker which is indicative of a conversation between the physician 103B and the patient 103A and not indicative of dictation by the physician 103B.

In the first stage 201A, the dictation detection module 101 takes all of the information (e.g., the extracted low-level features and the aggregated higher-level features) determined in the previous steps, such as steps 203, 205, and 209 of the workflow 200 and provides this information as inputs to a first classification model 211. In some implementations, the first classification model 211 can be a combination of one or more of a decision tree, max-Entropy models, and support vector machines. In other implementations, the first classification model 211 can be configured to include one or more neural network layers. In some implementations, the one or more neural network layers may include one or more deep neural networks ("DNN"), convolutional neural networks ("CNN"), long short-term memory ("LSTM") neural networks, and conditional random fields ("CRF") neural networks, to name a few examples.

In general, the first classification model 211 uses various techniques to determine one or more probabilities that the portion of the audio signal is or is not dictation. By way of example, in implementations where the first classification model 211 is one or more neural network layers, machine learning techniques can be used to determine one or more probabilities that the portion of audio is or is not dictation. That said, regardless of the specific techniques used, the first classification model 211 can be configured to determine one or more probabilities that the analyzed audio signal is dictation based on determinations made during the low-level feature extraction 203, including, e.g., pitch estimation 205, speaker distance 209, change of speaker, and the like. In addition, the first classification model 211 can determine one or more probabilities that the analyzed audio signal is or is not dictation based on higher-level features aggregated from the low-level features extracted by the system 100.

In the second stage 201B, the dictation detection module 101 performs additional analysis of the portion of audio using automatic speech recognition techniques. In one implementation, only portions of the audio that are determined to be dictation in the first stage 201A are passed to the second stage 201B for processing. This can improve the accuracy of the determination because automatic speech recognition models that are trained on detecting dictation can be confused generally when analyzing portions of audio that are not dictation (e.g., a conversation between the physician 103B and the patient 103A), and particularly where there are transitions between dictation and non-dictation in the audio.

In the second stage 201B, the automatic speech recognition engine trained on dictation 213 can be used to extract information from the portions of the audio that were determined to be dictation by the first stage 201A. In general, the automatic speech recognition engine trained on dictation 213 can be used to generate more accurate speech recognition results from the one or more portions of the audio that were determined to be dictation by the first stage 201A. For instance, in one example, the speech results returned by the automatic speech recognition engine trained on dictation 213 can be provided to a natural language understanding engine 215. The natural language understanding engine 215 can extract information from the identified speech that can be provided to the scribe 104A (e.g., as analyzed audio output 225A and 225B). In some implementation, the information extracted may be suggestive of other information that the system 100 should provide to the scribe 104A for entry into the EHR 102. In one example, if the dictated speech includes an indication that patient 103A is a smoker, the natural language understanding engine 215 may be configured to extract medications that it identifies in the dictated speech for inclusion in the EHR 102.

In another example, the system 100 can be configured with one or more templates that are preferred by the physician 103B for medical reporting purposes. Using the natural language understanding engine 215, the system 100 could, by way of example, automatically access a relevant template identified by the natural language understanding engine 215, populate the template with relevant information extracted from the audio signal (as identified by the natural language understanding engine 215), and present the populated template to the scribe 104A for the scribe 104A's review and eventual inclusion in the EHR 102. That is, the system 100 may include any number of templates that are associated with the physician 103B (e.g., according to the physician identifier) and select a relevant template to be automatically populated by the system 100 after conducting automatic speech recognition and natural language understanding analysis of the portions of the audio that are determined to be dictation.

The system 100 may utilize the natural language understanding engine 215 in other ways to suggest information to the scribe 104A that may be entered into the EHR 102. For instance, if the detected dictation was related to a tumor identified in a scan, the natural language understanding engine 215 may suggest one or more headers to be added to the EHR 102 that introduces such things as the type of tumor, the size of the tumor, the location of the tumor, and other characteristics that are established in the medical literature to quantify a tumor. In yet another example, the natural language understanding engine 215 can provide suggestions to the scribe 104A regarding where to insert information into the EHR 102. For instance, after suggesting the inclusion of a "Tumor Type" header in the EHR 102 on the basis of extracting information for the dictated portions of speech, the natural language understanding engine 215 may identify the tumor type as "lymphoma" based on additional extracted speech and suggest that "lymphoma" be included under the "Tumor Type" header.

Stated differently, the dictation detection module 101 can translate one or more words or phrases in the dictated portion of the audio signal (such as audio signals 105A and 105B) into a format (such as analyzed audio output 225A and 225B) that is conducive to scribing using the automatic speech recognition trained on dictation 213. That is, the dictation detection module 101 can translate one or more words or phrases from the audio signal into a format that is used by the scribe 104A when making modifications to the EHR 102. In some implementations, the second classification model 214 can generate a draft of the text extracted from the audio for inclusion in the EHR 102. As will be described below, this draft can be reviewed and edited by the scribe 104A to finalize entries into the EHR 102.

In addition, the system 100 can use the draft data to adapt both the first classification model 211 and the second classification model 214, according to particular implementations. For instance, the first classification model 211 and second classification model 214 can be adapted using implicit feedback. If, for example, the scribe 104A incorporates the portion of audio identified as dictation in the EHR 102, this strongly suggests that the identified audio portion was dictation. In response the system 100 can bias the first classification model 211 in such a way that future processing by the first classification model 211 may assign a higher probability that the portion of audio is dictation when later analyzing a similar audio signal. Conversely, if the scribe 104A does not incorporate portions of audio identified as dictation in the EHR 102, the system 100 may bias the first classification model 211 in such a what that future processing by the first classification model 211 may assign a lower probability that the portion of audio is dictation when later analyzing a similar audio signal.

Regarding the second classification model 214, the draft data can be used to improve the accuracy of the second classification model 214 using one or more conventional approaches. For instance, on example technique that can be used to adapt the automatic speech recognition engine trained on dictation 213 is described in United States Patent No. 9,552,809.

The system 100 may also be configured with one or more feedback models to adapt the first classification model 211 and the second classification model 214 using explicit feedback. For instance, the system 100 can configure and display a graphical user interface to the scribe 104A that includes one or more graphical user interface components that allow the scribe 104A to rate the accuracy of the identified dictation. In this way, the system can bias the first classification model 211 and/or the second classification model 214 based on the scribe 104A's feedback.

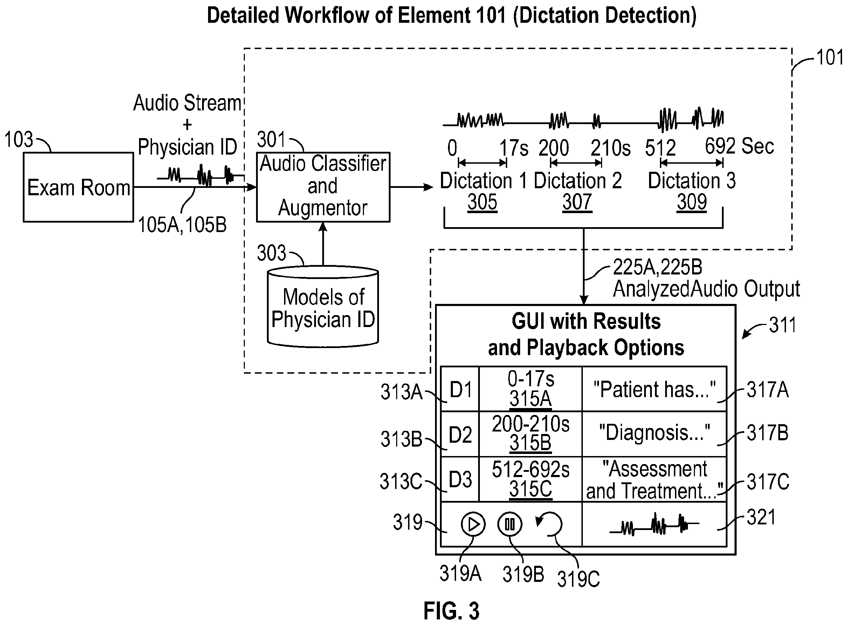

FIG. 3 is a block diagram illustrating additional aspects of the workflow 200 of the dictation detection module 101. The system 100 accesses a physician model stored within a collection of physician models 303 for a particular physician defined by the physician's identifier. In some implementations, the collection of physician models 303 is stored in networks 101A and 102A. In general, the collection of physician models 303 includes information derived over time based on processing a plurality of audio recordings between any number of physicians and those physcians' patients. For instance, physician model for physician 103B included in the collection of physician models 303 can include one or more trigger words that the physician 103B uses to indicate a dictation and that the system 100 has been trained on. As another example, a physician model in the collection of physician models 303 may include information regarding whether the physician recites punctuation when dictating. That is, the physician model for the physician 103B in the collection of physician models 303 may represent any amount of learned behaviors regarding the physician 103B and the relative impact of those learned behaviors on determinations that processed audio is or is not dictation.

In some implementations, the system 100 can provide a selected physician model to an audio classifier and augmentor 301 that applies the selected physician model to the audio signal. In some implementations, the audio classifier and augmentor 301 is the first classification model 211 that uses the selected physician model as part of the first stage 201A analysis of the audio signal. In other words, the audio classifier and augmentor 301 can use the selected physician model in the collection of physician models 303 to determine a probability that a portion of audio is indicative of dictation according to characteristics of the selected physician model.

As described above in reference to FIG. 2, the system 100 uses both a non-automatic speech recognition stage 201A and an automatic speech recognition stage 201B to process received audio from the ambient listening device 105. In general FIG. 3, illustrates the resulting output of the workflow 200 described in FIG. 2.

For instance, FIG. 3 shows that the dictation detection module 101 has produced segmented audio that identifies three segments that are dictation: "Dictation 1" 305, occurring at 0 seconds to 17 seconds of the audio signal, "Dictation 2" 307, occurring at 200 seconds to 210 seconds of the audio signal, and "Dictation 3" 309, occurring at 512s to 592 seconds of the audio signal.

The system 100 then generates a graphical user interface 311 that includes one or more different representations of the segmented audio portions. For instance, in FIG. 3, the graphical user interface 311 includes a table with three rows 313A, 313B, and 313C, one for each of the identified draft dictation segments 305, 307, and 309. The table may include time stamps 315A, 315B, and 315C for each draft dictation segment that specifies where in the audio signal the segments begin and end. If the scribe 104A selects on of the rows 313A, 313B, or 313C, the system 100 can jump ahead in the audio playback to the selected time stamp and play the audio for the scribes 104A.

The graphical user interface 311 may also include a preview of one or more words in the draft dictation segment as shown by preview areas 317A. 317B, and 317C. The scribe 104A can expand a preview area to read the draft dictation generated by the dictation detection module 101. The graphic user interface 311 may also include a user interface component that allows the scribe 104A to copy the draft text onto a clipboard of the computing device 104 and allow the scribe 104A to paste the copied text into the correct portion(s) of the EHR 102. In some implementations, portions of the EHR 102 may include binary check boxes or other non-textual information. The system 100 may provide the scribe with a similar data representation that the scribe 104A can select (or de-select) after reviewing a particular draft dictation segment to have the system 100 make a similar modification to the EHR 102. For instance, a patient's status as a smoker may be represented as check box (checked if a smoker, unchecked if a non-smoker). If automatic speech recognition engine 213 in combination with the natural language understanding engine 215 determine that a portion of the dictation includes a discussion regarding the patient's status as a smoker, the system 100 may provide a check-box prompt to allow the scribe 104A to check relevant boxes in the EHR 102 that correspond to this fact. This reduces the resource utilization of the system 100 because the scribe does not need to search the EHR 102 for the one or more relevant check boxes and can therefore complete his or her scribing tasks with more efficiency.

Furthermore, as described above, the system 100 can be configured to select and populate one or more templates for a particular physician according to information identified by the natural language understanding engine 215. In such implementations, the graphical user interface 311 may include a template preview showing the scribe 104A a template stored in the selected physician model in the collection of physician models 303. The system 100 may also preview for the scribe 104A a populated templated according to the information the natural language understanding engine 215 identified for inclusion in the selected template.

The graphical user interface 311 may also include a display area for presenting a waveform representation 321 of the audio signal to demonstrate to the scribe 104A what portion of the audio is currently being played and one or more controls 319 to control playback of the audio. For instance, the graphical user interface 311 may present a play button 319A, a pause button 319B, and a skip back button 319C. In some implementations, the skip back button 319C is automatically configured to skip back to the last spoken word, as identified and time stamped by the dictation detection module 101 when processing the audio signals as described elsewhere in this disclosure. In other implementations, the skip back button 319C can be configured to skip back to the beginning of the selected dictation segment, skip back to the beginning of the previous dictation segment in the analyzed audio output (e.g., analyzed audio output 225A and 225B), or configured in other ways to allow the scribe 104A efficient means of navigating playback.

As described above, the scribe 104A may wish to modify certain portions of the draft dictation segments 317A, 317B, 317C, or the EHR 102 (including prepopulated templates) in response to reviewing the selected audio portion In some implementations, the system 100 can capture these changes and use the changes to improve the accuracy of the underlying physician model maintained in the collection of physician models 303. For instance, similar to how implicit and explicit feedback can be used by the system 100 to bias the first classification model 211 and the second classification model 214, the system 100 can also use implicit and explicit feedback to bias, e.g., the probability that the physician associated with the physician model is dictating when stating punctuation. That is, by way of example, changes to the physician 103B's physician model may be stored by the system 100 in the collection of physician models 303 and used in the next time the system 100 analyzes audio segments generated during an encounter between physician 103B and his or her patients.

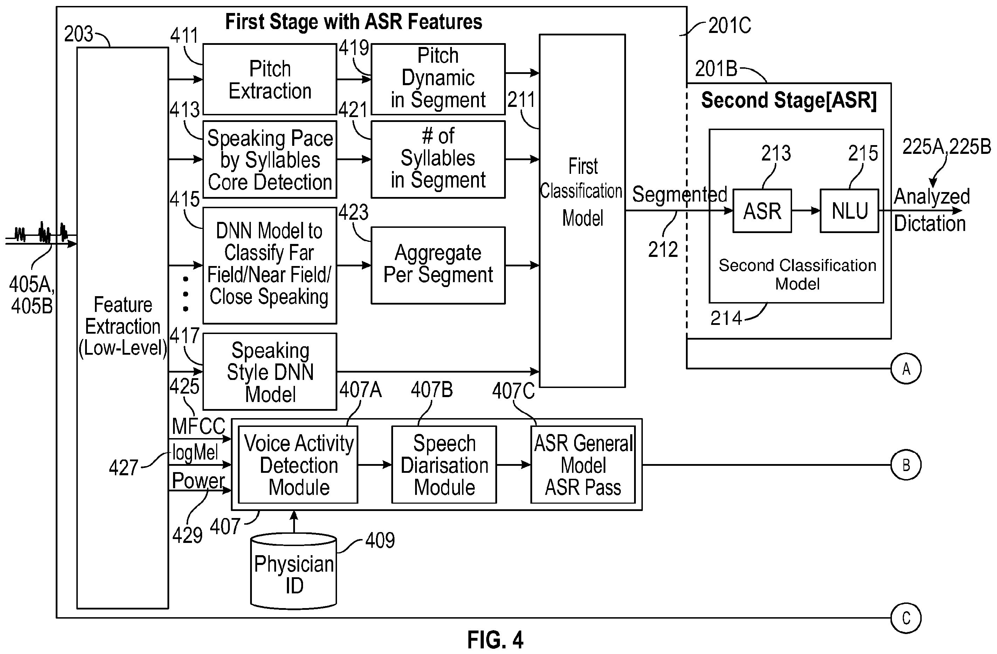

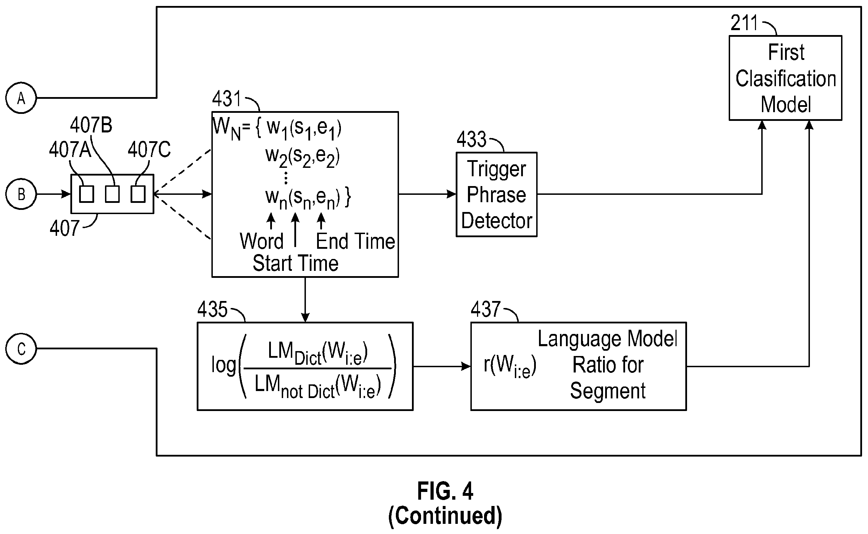

FIG. 4 is a block diagram illustrating another an example workflow 200 of the dictation detection module 101. As described above, the system 100 processes the audio in a first processing stage 201A that typically does not include automatic speech recognition to identify portions of audio that are indicative of dictation and then uses the second processing stage 201B that includes automatic speech recognition to extract relevant information from the audio that can be used to modify the EHR 102.

As described above, the system 100 may perform signal analysis of the audio signal in a first stage 201A that does not include automatic speech recognition. The system 100 may also perform a different first stage analysis that does include automatic speech recognition (as illustrated by first stage 201C). Many of the elements in FIG. 4, have been described in connection with FIG. 2. For instance, it has been described that the system 100 may perform pitch analysis 411 to determine the pitch dynamic 419 in a particular audio segment. As another example, it has been described that the system 100 can measure the speaking pace present in the audio segment 413 and count the number of syllables in the audio segment 421. It has also been described that the system 100 can classify the audio segment into close, far-field, and near-field speaking 415. In some implementations, a particular audio segment may have a combination of close, far-field, and near-field speaking. In either first stage 201A or first stage 201C, the system 100 can aggregate these values in an aggregation module 423 over the entire segment when determining whether the segment as a whole is indicative of dictation.

For the purposes of describing FIG. 4, elements previously disclosed are given new reference numbers because it is possible that these elements are configured differently when using automatic speech recognition during the first stage 201C than when not using automatic speech recognition in the first stage 201A. That said, it is contemplated that in most implementations, pitch extraction 411 will be the same the pitch analysis in 205, for example. Additionally, it should be understood that aspects of FIG. 4 that are discussed in connection with first stage 201C may nevertheless be implemented in the first stage 201A. For example, there is nothing that requires voice activity detection module 407A and speech diarisation module 407B from being used during the first stage 201A to provide information to the first classification module 211.

In some implementations, during the first stage 201C, the system 100 may identify regions within the audio where people are speaking using a voice activity detection module 407A. For instance, the first stage 201C can be configured to perform voice activity detection using an adaptive signal-based approach or a model-based approach using gaussian mixture models or neural networks. Once the audio is processed to identify those portions of audio that include speech, the system 100 may process the identified portions of audio with a speaker diarisation module 407B, which allows the system to determine whether the speaker is the physician 103B, the patient 103A, or someone else (e.g., a physician's assistant or a family member of the patient). For instance, a speaker diarisation module 407B subdivides the audio signal into one or more segments (e.g., using MFCC features) and computes a single gaussian value for each segment. The speaker diarisation module 407B may then perform a bottom up clustering by merging neighboring segments into larger segments. The speaker diarisation module 407B may continue to merge segments until the loss in likelihood is greater than a threshold value. In addition, the system 100 can be configured to leverage information contained in the physician model 409 stored in the collection of physician models 303 to improve the accuracy of one or both of the activity detection module 407A and the speaker diarisation module 407B. For instance, the system 100 can match acoustic markers stored in the physician model 409 with acoustic waveforms in the audio signal to determine or otherwise modify a probability determination that physician is speaking in a portion of the audio signal.

In some implementations, the results of the voice activity detection module 101 and speaker diarisation module 407B are provided to the automatic speech recognition as an initial pass. The pass using the automatic speech recognition model 407C in the first stage 201A may improve system performance generally by allowing the system 100 to additionally train or otherwise adapt the automatic speech recognition engine 407C in the first stage 201C and improve the accuracy of extracted words and concepts when the system 100 uses the automatic speech recognition engine 213 to analyze the portions of speech determined to be dictation in the second stage 201B. That said, while automatic speech recognition engine 407C is labeled separately from automatic speech recognition engine 213, it is contemplated that the models may in practice be the same according to particular implementations. But it should be appreciated that some implementations may configure engine 407C differently from engine 213 to leverage the fact that automatic speech recognition engine 407C may not have the benefit of receiving determinations from the entire first classification model 211. Furthermore, as stated above, it should be appreciated that voice activity detection module 407A and speech diarisation module 407B can provide inputs to the first classification model 211 during the first stage 201A that does not use automatic speech recognition. In other words, there is nothing that requires voice activity detection module 407A and speech diarisation module 407B to be used only in connection with automatic speech recognition.

In some implementations, portions of the first stage 201A and second stage 201B may be reversed. Specifically, the voice activity detection 407A can occur after automatic speech recognition (using either automatic speech recognition engine 213 or engine 407A) and not before. As a result, it should be appreciated that the order of steps described is illustrative and should not be seen as limiting the manner in which the audio signal is processed.

In some implementations, the ambient listening device 105 may be a multiple-microphone device. In such implementations, in addition to analyzing speaker distance (in either steps 209 or 415), the system can measure the direction of arrival of the audio. Typically, direction of arrival is represented as an angle measured by determining the direction that speaker's voice propagates incident to the multi-microphone device. This determination can allow the system 100 to determine where the speaker is speaking from to aid in the determination of who is speaking.

In some implementations, the system 100 can be configured to compute $W_N$, represented by element 431, which is defined as the word/token sequence of segment N consisting of n words/tokens. In other words, $W_N = w_1(S_1,E_1) w_2(S_2,E_2) ... w_n(S_n,E_n)$. According to this representation, $w_1(S_1,E_1)$ is the first word/token, $S_1$ is the start time of the first word/token, and $E_1$ is the end time of the first word/token. As a specific example, the system 100 may identify the words "what brings you in Wyatt" in an audio segment starting at 2.7 seconds into the audio recording and ending at 3.45 seconds into the audio recording. The system 100 may internally represent this information using the $W_N$ notion, e.g.: "what(2.70, 2.86) brings(2.87, 3.02) you(3.03, 3.12) in(3.18, 3.28) Wyatt(3.33, 3.45)." Accordingly, $w_1(S_1, E_1)$ would be the word "what" which starts at 2.70 seconds in the audio and ends at 2.86 seconds, $w_2(S_2,E_2)$ would be the word "brings," starting at 2.87 seconds in the audio and ending at 3.02 seconds in the audio, etc.

In some implementations, the system 100 can be configured to determine the value of rho =

$$r(Wi:e) = \log\left(\frac{LM_{Dict}(W_{i:e})}{LM_{NotDict}(W_{i:e})}\right),$$ represented by elements 435 and 437. In general, rho represents the log-ratio of language model probabilities computed based on identified spoken words (Wi:e) extracted from the audio signal. According to one implementation, a first language model is trained to model word usage in dictation providing a probability for the word sequence under the condition that it was dictated (specified by $LM_{Dict}$), a second language model computes the probability for the word sequence assuming the condition that the word sequence was not dictated but conversational (specified by $LM_{NotDict}$). If $LM_{Dict}$ assigns the word sequence a larger probability than $LM_{NotDict}$ rho will be positive otherwise rho will be negative. In some implementations, the system 100 identifies areas indicative of dictation when the system evaluates rho to be greater than 0. In some implementations, the system 100 may select one or more portions of the audio signal that have rho greater than a separate threshold tau or may perform other filtering on the portions of audio that are determined to have a rho value greater than zero.

It should be appreciated the system 100 configured in accordance with the present disclosure may perform a computer-implement process using one or more of the following steps, according to particular implementations. The system 100 can be used to train an initial first classification model 211 stored in a computer memory of one or more computing devices that makeup the system 100. The first classification model 211 is configured to process audio data to identify one or more audio segments that are indicative of dictation without using automatic speech recognition. The system 100 can be used to train an initial second classification model 214 stored in the computer memory of the one or more computing devices that makeup the system. The second classification model 214 is configured to process audio data using automatic speech recognition. The system 100 can receive audio data from a recording device 105. The system 100 can store the received audio data in the computer memory. The system 100 can analyze the stored audio data using the first classification model 211 to identify one or more segments in the audio data that are indicative of dictation. And the system 100 can analyze the one or more identified segments that are indicative of dictation using the second classification model 214 to extract one or more features from the one or more identified segments.

In some implementations, when analyzing the audio data using the first classification model 211, the system 100 may perform additional steps, including analyzing one or more low-level features 203, pitch estimation 205, speaker distance 209, and change of speaker. The system 100 can then provide the results of the analyzing to the first classification model. Using the first classification model 211, the system 211 can determine one or more probabilities for one or more segments in the audio data, wherein the one or more probabilities describe the likelihood that each of the one or more segments in the audio data is dictation. And the system 100 can select the one or more segments with a determined probability higher than a predetermined threshold as the identified one or more segments in the audio data that are indicative of dictation.

In some implementations, the low-level feature extraction 203 is configured to extract one or more met-frequency cepstral coefficient features, Fourier transformed features, log-mel features, power features, and zero crossings to identify one or more low-level features. In some implementations, the system 100 can aggregate the results analyzing one or more low-level features, pitch estimation 205, speaker distance 209, and change of speaker into one or more higher-level features. For instance, the system 100 can aggregate one or more low level features into one or more of the higher-level features that describes how a respective low-level feature changes over time. In some implementations, the recording device 105 is a multiple-microphone device and determining speaker distance is determined using stereoscopic information received from the recording device 105.

In some implementations, the first classification model 211 is a first neural network. For instance, the first classification model 211 can be a neural network that is configured to include one or more feed forward layers, one or more convolutional neural network layers, one or more long short-term memory neural network layers, and one or more a conditional random fields neural network layers. In some implementations, the second classification model 214 is a second neural network.

In some implementations, the system 100 can also generate a graphical user interface (e.g., graphical user interface 311) that presents the one or more identified segments that are indicative of dictation to a user and including one or more of the features extracted from the one or more identified segments. The system 100 can present the graphical user interface on a display device of the one or more computing devices, such as computing device 104. The system 100 can receive input from the one or more computing devices that represents agreement or disagreement with the extracted features from the one or more identified segments. The system 100 can store the information in an EHR 102 based on the received input. And the system 100 can adapt, using the received input as additional training data, and store the adapted first classification model and the adapted second classification model. According to the invention, the extracted features are a plurality of textual representations corresponding to a plurality of identified spoken words in the one or more identified segments. In some implementations, the received input is implicit input derived from one or more actions of a human user using the one or more computing devices. For instance, the one or more activities the scribe 104A performs on the computing device 104 can be interpreted by the system 100 as implicit agreement or implicit disagreement with the identified words that are indicative of dictation. In some implementations, the received input is explicit input from the scribe 104A using the computing device 104. For instance, the scribe 104A can provide input into the computing device 104 that corresponds to a correction to at least one textual representation in the plurality of textual representations, and a rating for at least one textual representation in the plurality of textual representations.

The system 100 can also use the adapted first classification model to train a new first classification model stored in the computer memory of the one or more computing devices that is configured to process audio data to identify one or more audio segments that are indicative of dictation without using automatic speech recognition. The system 100 can also use the adapted second classification model 214 to train a new second classification model 214 stored in the computer memory of the one or more computing devices that is configured to process audio data using automatic speech recognition. The system 100 can analyze the stored audio data using the new first classification model to identify one or more segments in the audio data that are indicative of dictation. And the system 100 can analyze the one or more identified segments that are indicative of dictation using the new second classification model 214 to extract one or more features from the one or more identified segments. In some implementations, the system 100 can generate a graphical user interface, present the graphical user interface, receive input from the one or more computing devices, store in formation in the EHR 102 as described above to adapt at least one of the new first classification model and the new second classification model 214 using the received input as additional training data.

## Claims

1.   A system for processing audio data, the system comprising:

   one or more computer processors communicatively coupled to a computer network;
   one or more computer storage devices accessible to the one or more computer processors having stored thereon,

      an initial first classification model having been trained to process audio data to identify one or more audio segments that are indicative of dictation, wherein the initial first classification model is configured to process the audio data without using an automatic speech recognition process, and
      an initial second classification model having been trained to process audio data, wherein the initial second classification model is configured to process the audio data using an automatic speech recognition process; and

   a recording device, wherein the one or more computer storage devices have computer instructions stored thereon that when executed by the one or more computer processors causes the one or more computer processors to perform operations comprising,

      receiving, over the computer network, audio data from a recording device;
      storing the received audio data in the one or more computer storage devices;
      analyzing the stored audio data using the initial first classification model to identify one or more segments in the audio data that are indicative of dictation; and
analyzing the one or more identified segments that are indicative of dictation using the initial second classification model to extract one or more textual representations corresponding to the identified spoken words extracted from the one or more identified segments.

2. The system of claim 1, wherein, when analyzing the audio data using the initial first classification model, the computer instructions cause the one or more computer processors to perform operations comprising:

    analyzing one or more low-level features, pitch estimation, speaker distance, and change of speaker;
    providing the results of the analyzing to the first classification model;
    determining, using the first classification model, one or more probabilities for one or more segments in the audio data, wherein the one or more probabilities describe the likelihood that each of the one or more segments in the audio data is dictation; and
    selecting the one or more segments with a determined probability higher than a predetermined threshold as the identified one or more segments in the audio data that are indicative of dictation.

3. The system of claim 2, wherein the recording device is a multiple-microphone device and speaker distance is determined using stereoscopic information received from the recording device.

4. The system of claim 2, wherein, when performing the low-level feature extraction, the computer instructions cause the one or more computer processors to extract one or more mel-frequency cepstral coefficient features, Fourier transformed features, log-mel features, power features, and zero crossings to identify one or more low-level features.

5. The system of claim 2, wherein the computer instructions cause the one or more computer processors to perform operations further comprising:
aggregating the results of analyzing the one or more low-level features, pitch estimation, speaker distance, and change of speaker into one or more higher-level features.

6. The system of claim 5, wherein one or more of the higher-level features describes how a respective low-level feature changes over time.

7. The system of claim 1, wherein the first classification model is a first neural network.

8. The system of claim 7, wherein the first neural network comprises:

    one or more feed forward layers;
    one or more convolutional neural network layers;
    one or more long short-term memory neural network layers; and
    one or more conditional random fields neural network layers.

9. The system of claim 1, wherein the second classification model is a second neural network.

10. The system of claim 1, wherein one or more of the computer processors are in communication with one or more display devices and the computer instructions cause the one or more computer processors to perform operations further comprising:

    generating a graphical user interface that presents the one or more identified segments that are indicative of dictation to a user and include one or more of the textual representations corresponding to the identified spoken words extracted from the one or more identified segments;
    presenting, on the one or more display devices, the graphical user interface;
    receiving input from the one or more computer processors in communication with the respective display devices on which the graphical user interface was presented, the received input representing agreement or disagreement with the plurality of textual representations corresponding to the identified spoken words extracted from the one or more identified segments;
    storing, on the one or more computer storage devices, the information in an electronic health record based on the received input;
    adapting the initial second classification model using the received input as additional training data; and
    storing, on the one or more computer storage devices, the adopted second classification model.

11. The system of claim 10, wherein the computer instructions cause the one or more computer processors to perform operations further comprising:

    adapting the initial first classification model using the received input as additional training data; and
    storing, on the one or more computer storage devices, the adapted first classification model.

**12.** The system of claim 11, wherein the received input is implicit input derived from one or more actions of a human user using the one or more computer processors.

**13.** The system of claim 11, wherein the received input is explicit input from a human user using the one or more computer processors and wherein the received input is one or more of at least one correction to a textual representation in the plurality of textual representations and a rating for at least one textual representation in the plurality of textual representations.

**14.** The system of claim 11, wherein the computer instructions cause the one or more computer processors to perform operations further comprising:

training a new first classification model, using the adapted first classification model, that is configured to process audio data to identify one or more audio segments that are indicative of dictation without using automatic speech recognition;
storing the new first classification model in the computer;
training a new second classification model, using the adapted second classification model, that is configured to process audio data using automatic speech recognition;
storing the new second classification model in the computer memory;
receiving audio data from a recording device;
storing the received audio data in the computer memory;
analyzing the stored audio data using the new first classification model to identify one or more segments in the audio data that are indicative of dictation; and
analyzing the one or more identified segments that are indicative of dictation using the new second classification model to extract one or more features from the one or more identified segments.

**15.** The system of claim 14, wherein the computer instructions cause the one or more computer processors to perform operations further comprising:

generating a graphical user interface that presents the one or more identified segments that are indicative of dictation to a user and including one or more of the textual representations corresponding to the identified spoken words extracted from the one or more segments identified by the new second classification model;
presenting the graphical user interface on at least one display device;

receiving input from the one more computer processors in communication with the respective display devices on which the graphical user interface was presented, the received input representing agreement or disagreement with the plurality of textual representations corresponding to the identified spoken words extracted from the one or more segments identified by the new second classification model;
storing, in the computer memory of the one or more computing devices, the information in an electronic health record based on the received input; and
adapting at least one of the new first classification model and the new second classification model using the received input as additional training data.

**Patentansprüche**

**1.** Ein System zum Verarbeiten von Audiodaten, das System aufweisend:

einen oder mehrere Computerprozessoren, die mit einem Computernetzwerk kommunikativ gekoppelt sind;
eine oder mehrere Computerspeichervorrichtungen, auf die der eine oder die mehreren Computerprozessoren zugreifen können, die darauf gespeichert aufweisen:

ein anfängliches erstes Klassifikationsmodell, das darauf trainiert wurde, Audiodaten zu verarbeiten, um ein oder mehrere Audiosegmente zu identifizieren, die auf ein Diktat hinweisen, wobei das anfängliche erste Klassifikationsmodell konfiguriert ist, um die Audiodaten ohne Verwendung eines automatischen Spracherkennungsprozesses zu verarbeiten, und
ein anfängliches zweites Klassifikationsmodell, das darauf trainiert wurde, Audiodaten zu verarbeiten, wobei das anfängliche zweite Klassifikationsmodell konfiguriert ist, um die Audiodaten unter Verwendung eines automatischen Spracherkennungsprozesses zu verarbeiten; und
eine Aufzeichnungsvorrichtung, wobei die eine oder die mehreren Computerspeichervorrichtungen Computeranweisungen darauf gespeichert aufweisen, die, wenn sie durch den einen oder die mehreren Computerprozessoren ausgeführt werden, veranlassen, dass der eine oder die mehreren Computerprozessoren Operationen durchführen, aufweisend
Empfangen, über das Computernetzwerk, von Audiodaten von einer Aufnahmevorrichtung;

Speichern der empfangenen Audiodaten in der einen oder den mehreren Computerspeichervorrichtungen;

Analysieren der gespeicherten Audiodaten unter Verwendung des anfänglichen ersten Klassifikationsmodells, um ein oder mehrere Segmente in den Audiodaten zu identifizieren, die auf ein Diktat hinweisen; und

Analysieren des einen oder der mehreren identifizierten Segmente, die auf ein Diktat hinweisen, unter Verwendung des anfänglichen zweiten Klassifikationsmodells, um eine oder mehrere Textdarstellungen zu extrahieren, die den identifizierten gesprochenen Wörtern entsprechen, die aus dem einen oder den mehreren identifizierten Segmenten extrahiert werden.

2. Das System nach Anspruch 1, wobei, wenn die Audiodaten unter Verwendung des anfänglichen ersten Klassifikationsmodells analysiert werden, die Computeranweisungen veranlassen, dass der eine oder die mehreren Computerprozessoren Operationen durchführen, aufweisend:

Analysieren eines oder mehrerer niederrangiger Merkmale, einer Tonhöhenschätzung, Sprecherdistanz und eines Sprecherwechsels;

Bereitstellen der Ergebnisse des Analysierens an das erste Klassifikationsmodell;

Bestimmen, unter Verwendung des ersten Klassifikationsmodells, einer oder mehrerer Wahrscheinlichkeiten für ein oder mehrere Segmente in den Audiodaten, wobei die eine oder die mehreren Wahrscheinlichkeiten die Möglichkeit beschreiben, dass jedes des einen oder der mehreren Segmente in den Audiodaten ein Diktat ist; und

Auswählen des einen oder der mehreren Segmente mit einer bestimmten Wahrscheinlichkeit, die höher als ein vorbestimmter Schwellenwert ist, als das identifizierte eine oder die identifizierten mehreren Segmente in den Audiodaten, die auf ein Diktat hinweisen.

3. Das System nach Anspruch 2, wobei die Aufnahmevorrichtung eine Vorrichtung mit mehreren Mikrofonen ist und der Sprecherabstand unter Verwendung stereoskopischer Informationen bestimmt wird, die von der Aufnahmevorrichtung empfangen werden.

4. Das System nach Anspruch 2, wobei, wenn die Extraktion von niederrangigen Merkmalen durchgeführt wird, die Computeranweisungen veranlassen, dass der eine oder die mehreren Computerprozessoren ein oder mehrere Mel-Frequenz-Cepstral-Koeffizientenmerkmale, Fourier-transformierte Merkmale, Log-Mel-Merkmale, Leistungsmerkmale und Nulldurchgänge extrahieren, um ein oder mehrere niederrangige Merkmale zu identifizieren.

5. Das System nach Anspruch 2, wobei die Computeranweisungen veranlassen, dass der eine oder die mehreren Computerprozessoren Operationen durchführen, ferner aufweisend:

Zusammenfassen der Ergebnisse des Analysierens des einen oder der mehreren niederrangigen Merkmale, der Tonhöhenschätzung, der Sprecherdistanz und des Sprecherwechsels, zu einem oder mehreren höherrangigen Merkmalen.

6. Das System nach Anspruch 5, wobei ein oder mehrere der höherrangigen Merkmale beschreiben, wie ein jeweiliges niederrangiges Merkmal sich im Laufe der Zeit verändert.

7. Das System nach Anspruch 1, wobei das erste Klassifikationsmodell ein erstes neuronales Netzwerk ist.

8. Das System nach Anspruch 7, wobei das erste neuronale Netzwerk aufweist:

eine oder mehrere Feedforward-Schichten;

eine oder mehrere Schichten eines neuronalen Faltungsnetzwerks (CNN);

eine oder mehrere Schichten eines neuronalen Netzwerks für das lange Kurzzeitgedächtnis (LSTM); und

eine oder mehrere Schichten neuronaler Netzwerke mit bedingten Zufallsfeldern.

9. Das System nach Anspruch 1, wobei das zweite Klassifikationsmodell ein zweites neuronales Netzwerk ist.

10. Das System nach Anspruch 1, wobei ein oder mehrere der Computerprozessoren mit einer oder mehreren Anzeigevorrichtungen in Kommunikation stehen und die Computeranweisungen veranlassen, dass der eine oder die mehreren Computerprozessoren Operationen durchführen, ferner aufweisend:

Generieren einer grafischen Benutzeroberfläche, die einem Benutzer das eine oder die mehreren identifizierten Segmente zeigt, die auf ein Diktat hinweisen, und eine oder mehrere der Textdarstellungen enthalten, die den identifizierten gesprochenen Wörtern entsprechen, die aus dem einen oder den mehreren identifizierten Segmenten extrahiert werden;

Zeigen, auf der einen oder den mehreren Anzeigevorrichtungen, der grafischen Benutzeroberfläche;

Empfangen einer Eingabe von dem einen oder den mehreren Computerprozessoren in Kommunikation mit den jeweiligen Anzeigevorrichtungen, auf denen die grafische Benutzeroberfläche dargestellt wurde, wobei die empfangene Eingabe eine Zustimmung oder eine Ablehnung zu der Vielzahl von Textdarstellungen darstellen, die den identifizierten gesprochenen Wörtern entsprechen, die aus dem einen oder den mehreren identifizierten Segmenten extrahiert werden;

Speichern, auf der einen oder den mehreren Computerspeichervorrichtungen, der Informationen in einer elektronischen Patientenakte basierend auf der empfangenen Eingabe;

Anpassen des anfänglichen zweiten Klassifikationsmodells unter Verwendung der empfangenen Eingabe als zusätzliche Trainingsdaten; und

Speichern, auf der einen oder den mehreren Computerspeichervorrichtungen, des übernommenen zweiten Klassifikationsmodells.

11. Das System nach Anspruch 10, wobei die Computeranweisungen veranlassen, dass der eine oder die mehreren Computerprozessoren Operationen durchführen, ferner aufweisend:

Anpassen des anfänglichen ersten Klassifikationsmodells unter Verwendung der empfangenen Eingabe als zusätzliche Trainingsdaten; und

Speichern, auf der einen oder den mehreren Computerspeichervorrichtungen, des angepassten ersten Klassifikationsmodells.

12. Das System nach Anspruch 11, wobei die empfangene Eingabe eine implizite Eingabe ist, die aus einer oder mehreren Aktionen eines menschlichen Benutzers unter Verwendung des einen oder der mehreren Computerprozessoren abgeleitet wird.

13. Das System nach Anspruch 11, wobei die empfangene Eingabe eine explizite Eingabe von einem menschlichen Benutzer unter Verwendung des einen oder der mehreren Computerprozessoren ist, und wobei die empfangene Eingabe eine oder mehrere von mindestens einer Korrektur einer Textdarstellung in der Vielzahl von Textdarstellungen und einer Bewertung für mindestens eine Textdarstellung in der Vielzahl von Textdarstellungen ist.

14. Das System nach Anspruch 11, wobei die Computeranweisungen veranlassen, dass der eine oder die mehreren Computerprozessoren Operationen durchführen, ferner aufweisend:

Trainieren eines neuen ersten Klassifikationsmodells unter Verwendung des angepassten ersten Klassifikationsmodells, das konfiguriert ist, um Audiodaten zu verarbeiten, um ein oder mehrere Audiosegmente zu identifizieren, die auf ein Diktat hinweisen, ohne automatische Spracherkennung zu verwenden;

Speichern des neuen ersten Klassifikationsmodells in dem Computer;

Trainieren eines neuen zweiten Klassifikationsmodells unter Verwendung des angepassten zweiten Klassifikationsmodells, das konfiguriert ist, um Audiodaten unter Verwendung der automatischen Spracherkennung zu verarbeiten;

Speichern des neuen zweiten Klassifikationsmodells in dem Computerspeicher;

Empfangen von Audiodaten von einer Aufnahmevorrichtung;

Speichern der empfangenen Audiodaten in dem Computerspeicher;

Analysieren der gespeicherten Audiodaten unter Verwendung des neuen ersten Klassifikationsmodells, um ein oder mehrere Segmente in den Audiodaten zu identifizieren, die auf ein Diktat hinweisen; und

Analysieren des einen oder der mehreren identifizierten Segmente, die auf ein Diktat hinweisen, unter Verwendung des neuen zweiten Klassifikationsmodells, um ein oder mehrere Merkmale aus dem einen oder den mehreren identifizierten Segmenten zu extrahieren.

15. Das System nach Anspruch 14, wobei die Computeranweisungen veranlassen, dass der eine oder die mehreren Computerprozessoren Operationen durchführen, ferner aufweisend:

Generieren einer grafischen Benutzeroberfläche, die einem Benutzer das eine identifizierte oder die mehreren identifizierten Segmente zeigt, die auf ein Diktat hinweisen, und die eine oder mehrere der Textdarstellungen enthalten, die den identifizierten gesprochenen Wörtern entsprechen, die aus dem einen oder den mehreren Segmenten extrahiert werden, die durch das neue zweite Klassifikationsmodell identifiziert werden;

Darstellen der grafischen Benutzeroberfläche auf mindestens einer Anzeigevorrichtung;

Empfangen der Eingabe von dem einen oder den mehreren Computerprozessoren, die mit den jeweiligen Anzeigevorrichtungen in Kommunikation stehen, auf denen die grafische Benutzeroberfläche dargestellt wird, wobei die empfangene Eingabe eine Zustimmung oder eine Ablehnung mit der Vielzahl von Textdarstellungen darstellt, die den identifizierten gesprochenen Wörtern entsprechen, die aus dem einen oder den mehreren Segmenten extrahiert werden, die durch das neue zweite Klassifikationsmodell identifiziert werden;

Speichern, in dem Computerspeicher der einen oder der mehreren Computervorrichtungen, der Informationen in einer elektronischen Patientenakte basierend auf der empfangenen Eingabe; und

Anpassen von mindestens einem des neuen ersten Klassifikationsmodells und des neuen zweiten Klassifikationsmodells unter Verwendung der empfangenen Eingabe als zusätzliche Trainingsdaten.

## Revendications

1. Système permettant de traiter des données audio, le système comprenant :

un ou plusieurs processeurs d'ordinateur couplés par communications avec un réseau d'ordinateurs ;

un ou plusieurs dispositifs de stockage d'ordinateur accessibles aux un ou plusieurs processeurs d'ordinateur sur lesquels sont stockés,

un premier modèle de classification initial ayant été entraîné pour traiter des données audio pour identifier un ou plusieurs segments audio qui indiquent une dictée, dans lequel le premier modèle de classification initial est configuré pour traiter les données audio sans utiliser de processus de reconnaissance vocale automatique, et

un second modèle de classification initial ayant été entraîné pour traiter des données audio, dans lequel le second modèle de classification initial est configuré pour traiter les données audio à l'aide d'un processus de reconnaissance vocale automatique ; et

un dispositif d'enregistrement, dans lequel les un ou plusieurs dispositifs de stockage d'ordinateur ont des instructions d'ordinateur stockées sur ceux-ci qui lorsqu'elles sont exécutées par les un ou plusieurs processeurs d'ordinateur amènent les un ou plusieurs processeurs d'ordinateur à mettre en œuvre des opérations comprenant,

la réception, sur le réseau d'ordinateurs, de données audio en provenance d'un dispositif d'enregistrement ;

le stockage des données audio reçues dans les un ou plusieurs dispositifs de stockage d'ordinateur ;

l'analyse des données audio stockées à l'aide du premier modèle de classification initial pour identifier un ou plusieurs segments dans les données audio qui indiquent une dictée ; et

l'analyse des un ou plusieurs segments identifiés qui indiquent une dictée à l'aide du second modèle de classification initial pour extraire une ou plusieurs représentations textuelles correspondant aux mots prononcés identifiés extraits des un ou plusieurs segments identifiés.

2. Système selon la revendication 1, dans lequel, lors de l'analyse des données audio à l'aide du premier modèle de classification initial, les instructions d'ordinateur amènent les un ou plusieurs processeurs d'ordinateur à mettre en œuvre des opérations comprenant :

l'analyse d'une ou plusieurs caractéristiques de bas niveau, d'estimation de hauteur tonale, de distance du locuteur et de changement de locuteur ;

la fourniture des résultats de l'analyse au premier modèle de classification ;

la détermination, à l'aide du premier modèle de classification, d'une ou plusieurs probabilités pour un ou plusieurs segments dans les données audio, dans lequel les une ou plusieurs probabilités décrivent la vraisemblance que chacun parmi les un ou plusieurs segments dans les données audio soit une dictée ; et

la sélection des un ou plusieurs segments avec une probabilité déterminée supérieure à un seuil prédéterminé en guise de l'un ou plusieurs segments identifiés dans les données audio qui indiquent une dictée.

3. Système selon la revendication 2, dans lequel le dispositif d'enregistrement est un dispositif à microphones multiples et la distance du locuteur est déterminée à l'aide d'informations stéréoscopiques reçues en provenance du dispositif d'enregistrement.

4. Système selon la revendication 2, dans lequel, lors de la mise en œuvre de l'extraction de caractéristiques de bas niveau, les instructions d'ordinateur amènent les un ou plusieurs processeurs d'ordinateur à extraire une ou plusieurs caractéristiques de coefficient cepstral de fréquence mel, caractéristiques transformées par Fourier, caractéristiques logmel, caractéristiques de puissance et passage par le point zéro pour identifier une ou plusieurs caractéristiques de bas niveau.

5. Système selon la revendication 2, dans lequel les instructions d'ordinateur amènent les un ou plusieurs processeurs d'ordinateur à mettre en œuvre des opérations comprenant en outre :
l'agrégation des résultats d'analyse des une ou plusieurs caractéristiques de bas niveau, d'estimation de hauteur tonale, de distance du locuteur et de changement de locuteur en une ou plusieurs caractéristiques de niveau supérieur.

6. Système selon la revendication 5, dans lequel une ou plusieurs des caractéristiques de niveau supérieur décrivent la manière dont une caractéristique de bas niveau respective change au fil du temps.

7. Système selon la revendication 1, dans lequel le premier modèle de classification est un premier réseau neuronal.

8. Système selon la revendication 7, dans lequel le premier réseau neuronal comprend :

   une ou plusieurs couches à propagation avant ;
   une ou plusieurs couches de réseau neuronal convolutionnel (CNN);
   une ou plusieurs couches de réseau neuronal à mémoire à court terme longue (CSTM); et
   une ou plusieurs couches de réseau neuronal à champs aléatoires conditionnels.

9. Système selon la revendication 1, dans lequel le second modèle de classification est un second réseau neuronal.

10. Système selon la revendication 1, dans lequel un ou plusieurs des processeurs d'ordinateur sont en communication avec un ou plusieurs dispositifs d'affichage et les instructions d'ordinateur amènent les un ou plusieurs processeurs d'ordinateur à mettre en oeuvre des opérations comprenant en outre :

   la génération d'une interface graphique utilisateur qui présente les un ou plusieurs segments identifiés qui indiquent une dictée à un utilisateur et comportent une ou plusieurs des représentations textuelles correspondant aux mots prononcés identifiés extraits des un ou plusieurs segments identifiés ;
   la présentation, sur les un ou plusieurs dispositifs d'affichage, de l'interface graphique utilisateur ;
   la réception d'une entrée en provenance des un ou plusieurs processeurs d'ordinateur en communication avec les dispositifs d'affichage respectifs sur lesquels l'interface graphique utilisateur a été présentée, l'entrée reçue représentant un accord ou un désaccord avec la pluralité de représentations textuelles correspondant aux mots prononcés identifiés extraits des un ou plusieurs segments identifiés ;
   le stockage, sur les un ou plusieurs dispositifs de stockage d'ordinateur, des informations dans un dossier médical électronique en fonction de l'entrée reçue ;
   l'adaptation du second modèle de classification initial à l'aide de l'entrée reçue en guise de données d'entraînement supplémentaires ; et
le stockage, sur les un ou plusieurs dispositifs de stockage d'ordinateur, du second modèle de classification adopté.

11. Système selon la revendication 10, dans lequel les instructions d'ordinateur amènent les un ou plusieurs processeurs d'ordinateur à mettre en œuvre des opérations comprenant en outre :

   l'adaptation du premier modèle de classification initial à l'aide de l'entrée reçue en guise de données d'entraînement supplémentaires ; et
   le stockage, sur les un ou plusieurs dispositifs de stockage d'ordinateur, du premier modèle de classification adapté.

12. Système selon la revendication 11, dans lequel l'entrée reçue est une entrée implicite dérivée d'une ou plusieurs actions d'un utilisateur humain en utilisant les un ou plusieurs processeurs d'ordinateur.

13. Système selon la revendication 11, dans lequel l'entrée reçue est une entrée explicite provenant d'un utilisateur humain en utilisant les un ou plusieurs processeurs d'ordinateur et dans lequel l'entrée reçue est une ou plusieurs parmi au moins une correction à une représentation textuelle dans la pluralité de représentations textuelles et une évaluation pour au moins une représentation textuelle dans la pluralité de représentations textuelles.

14. Système selon la revendication 11, dans lequel les instructions d'ordinateur amènent les un ou plusieurs processeurs d'ordinateur à mettre en œuvre des opérations comprenant en outre :

   l'entraînement d'un nouveau premier modèle de classification, à l'aide du premier modèle de classification adapté, qui est configuré pour traiter des données audio pour identifier un ou plusieurs segments audio qui indiquent une dictée sans utiliser de reconnaissance vocale automatique ;
   le stockage du nouveau premier modèle de classification dans l'ordinateur ;
   l'entraînement d'un nouveau second modèle de classification, à l'aide du second modèle de classification adapté, qui est configuré pour traiter des données audio à l'aide d'une reconnaissance vocale automatique ;
   le stockage du nouveau second modèle de classification dans la mémoire d'ordinateur ;
   la réception de données audio en provenance d'un dispositif d'enregistrement ;
   le stockage des données audio reçues dans la mémoire d'ordinateur ;
   l'analyse des données audio stockées à l'aide du nouveau premier modèle de classification pour identifier un ou plusieurs segments dans les données audio qui indiquent une dictée ; et l'analyse des un ou plusieurs segments identifiés qui indiquent une dictée à l'aide du nouveau second modèle de classification pour extraire une ou plusieurs caractéristiques des un ou plusieurs segments identifiés.

15. Système selon la revendication 14, dans lequel les instructions d'ordinateur amènent les un ou plusieurs processeurs d'ordinateur à mettre en œuvre des opérations comprenant en outre :

la génération d'une interface graphique utilisateur qui présente les un ou plusieurs segments identifiés qui indiquent une dictée à un utilisateur et comportant une ou plusieurs des représentations textuelles correspondant aux mots prononcés identifiés extraits des un ou plusieurs segments identifiés par le nouveau second modèle de classification ;
la présentation de l'interface graphique utilisateur sur au moins un dispositif d'affichage ;
la réception d'une entrée en provenance des un ou plusieurs processeurs d'ordinateur en communication avec les dispositifs d'affichage respectifs sur lesquels l'interface graphique utilisateur a été présentée, l'entrée reçue représentant un accord ou un désaccord avec la pluralité de représentations textuelles correspondant aux mots prononcés identifiés extraits des un ou plusieurs segments identifiés par le nouveau second modèle de classification ;
le stockage, dans la mémoire d'ordinateur des un ou plusieurs dispositifs informatiques, des informations dans un dossier médical électronique en fonction de l'entrée reçue ; et
l'adaptation d'au moins l'un parmi le nouveau premier modèle de classification et le nouveau second modèle de classification à l'aide de l'entrée reçue en guise de données d'entraînement supplémentaires.

**System Overview**

**Exam Room**

Patient
103A

Physician
103B

Ambient
Listening
Device
105

105A,105B

EHR
102

102A

101A

Dictation
Detection
101

107

Scribe
104A

104

100

Updates/Corrections

**FIG. 1**

**FIG. 2**

**Detailed Workflow of Element 101 (Dictation Detection)**

FIG. 3

EP 4 233 045 B1

**FIG. 4**

EP 4 233 045 B1

EP 4 233 045 B1

**FIG. 4**
**(Continued)**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017092297 A1

- US 9552809 B